# EUROPEAN PATENT SPECIFICATION

(11) **EP 2 237 541 B1**
(45) Date of publication and mention of the grant of the patent: **03.07.2013**
(21) Application number: 09713823.4
(22) Date of filing: 25.02.2009
(51) Int. Cl.: H04H 60/66, H04H 20/57, H04H 60/91, H04H 60/44, H04N 21/442, H04N 21/658, H04N 21/61

(54) **DATA COLLECTING METHOD AND THE MOBILE TERMINAL THEREOF**
DATENSAMMELVERFAHREN UND MOBILES ENDGERÄT DAFÜR
PROCÉDÉ DE COLLECTE DE DONNÉES ET SON TERMINAL MOBILE

(30) Priority: 27.02.2008 CN 200810026499
(43) Date of publication of application: 06.10.2010
(73) Proprietor: Huawei Technologies Co., Ltd., Longgang District, Shenzhen Guangdong 518129 (CN)
(72) Inventor: ZHANG, Huiping, Longgang District Shenzhen 518129 (CN); YANG, Jian, Longgang District Shenzhen 518129 (CN); CHEN, Guoqiao, Longgang District Shenzhen 518129 (CN); WANG, Lei, Longgang District Shenzhen 518129 (CN)
(74) Representative: Kreuz, Georg Maria
(86) International application number: PCT/CN2009/070538
(87) International publication number: WO 2009/106000

(56) References cited:
- CN-A- 1 420 679
- CN-A- 1 494 340
- CN-A- 1 627 816
- CN-A- 1 668 103
- CN-A- 1 852 355
- CN-A- 101 076 093
- CN-A- 101 088 251
- CN-A- 101 370 129

## Description

### FIELD OF THE TECHNOLOGY

The present invention relates to the field of communications technologies, and more particularly to a method for collecting data and a mobile terminal thereof.

### BACKGROUND OF THE INVENTION

With the rapid progress of mobile communication, the service scope is gradually expanded from voice to data and multimedia services, where the asymmetry of video service is more and more obvious. The digital television terrestrial broadcasting (DTTB) has a broadcast channel with a high transmission bit rate and a broad bandwidth, hence a service network combining the terrestrial digital broadcasting system and a mobile network occurs. However, the improvement of such service requires the coordination of various links.

Service network optimization is an important stage in the construction of the network throughout the whole network construction process, and service network optimization is also the guarantee to improve the quality of service. The first step of service network optimization is to collect data information, and an optimization adjustment scheme is finally obtained by analyzing the collected data with relevant software.

Before the implementation of service network optimization, it is essential to grasp comprehensively the relevant system data information. Therefore, data information collection is the premise and basis for formulating and implementing a specific network optimization scheme. The system data information may include audience measurement (AM) data, business support system (BSS) data information, traffic statistical data information, drive test data information and so on.

The system data information and the traffic statistical data information can be extracted from a central machine room. The broadcasting network as a single-direction network does not include a back-transmission channel and is unable to collect the network data by utilizing its own network, so the AM data and drive test data information relevant to the broadcast service network need to be measured manually.

Chinese patent application CN1668103A defines an audience information collection mobile terminal. The terminal has a wave receiver for receiving a broadcast wave, a level measuring part for measuring a reception level of the broadcast wave received by the wave receiver, an information generator for generating audience information containing an audience time, and the reception level at the audience time, an audience information storage for storing the audience information, and an information transmitter for transmitting the audience information. In particular, the information transmitter is a part that transmits the audience information stored in the audience information storage to a server apparatus. The timing of this transmission may be the timing when the audience information is generated by the information generator, the timing when a certain volume of data is accumulated in the audience information storage, or intervals of a fixed time.

Chinese patent application CN1852355A provides user communication character information collection method. A terminal receives an information collection command sent from a server, and collects the user communication character information according to the information collection command, and then sends the user communication character information to the server. In particular, the information collection command includes a trigger condition to collect and content to be collected. The trigger condition is a time interval.

Chinese patent application CN1494340A defines an environment data collection method using a terminal. The collection process includes selecting a special terminal located in a special location, and then collecting an environment data to report

Chinese patent application CN101076093A defines a viewing/listening information collecting method using a terminal. In particular, the terminal is provided with a viewing/listening information transmitting program for generating and transmitting viewing/listening information, and acquires and saves acquired time, acquired channel number, and position information as the viewing/listening information. When setup time arrives, the terminal transmits the viewing/listening information accumulated in the portable communication terminal to the viewing/listening information database by E-mail.

However, it has become apparent that the prior art has the following problems.

This manual measurement method relies on the plan developed by an operator to perform measurement, lacks the capability of spontaneously collecting the data information by the terminal device, and consumes considerable labor, materials and time at the same time. Furthermore, since the data is collected through sample test points, it can only reflect the data of the broadcasting network in the coverage of the sample test points, and the data of the areas out of the reach of the test area can only be obtained through inference. For example, in the collection of drive test data information, the measurement performed by specialists may generally avoid or neglect high office buildings, residential buildings, entertainment places, and dense alleyways, while these places are often just the places where data and multimedia service are relatively dense, and tend to be relevant to broadcasting network design. Because this involves problems that affect the system such as multi-layer coverage, cross coverage and repeater, and indoor distribution, it is very difficult to obtain accurate data information of the broadcasting network through a drive test.

### SUMMARY OF THE INVENTION

In view of this, the present invention is directed to a method for collecting data according to claim 1 and a mobile terminal according to claim 9. The data information required for broadcasting network optimization can be effectively collected by a mobile terminal in a mobile network.

According to a first aspect, the present invention provides a method for collecting data, which includes the following steps.

Data information of a broadcasting network is collected; and The collected data information is reported through a mobile network.

According to a second aspect, the present invention provides a mobile terminal, which includes a collecting unit and a sending unit.

The collecting unit is configured to collect data information of a broadcasting network; and

The sending unit is configured to send the collected data information to a server.

In the present invention, by utilizing the mobile terminal in a mobile network to collect the data information of the broadcasting network, the problem that the broadcasting network as a single-direction broadcasting network does not include a back-transmission channel and is unable to spontaneously collect the data information of the broadcasting network by using a terminal device is solved. Meanwhile, the data information of the broadcasting network usually in an avoided or neglected area with a drive test collecting method can be collected by utilizing the mobile terminal in the mobile network, and considerable labor, materials and time can be saved by collecting data information spontaneously with the mobile terminal.

### BRIEF DESCRIPTION OF THE DRAWINGS

FIG. 1 is a schematic structural diagram of an embodiment of a mobile terminal for collecting data according to the present invention;
FIG. 2 is a schematic structural diagram of another embodiment of the mobile terminal for collecting data according to the present invention;
FIG. 3 is a schematic structural diagram of a collecting unit in the mobile terminal of FIG. 2;
FIG. 4 is a flow chart of an embodiment of a method for collecting data according to the present invention;
FIG. 5 is a flow chart of an embodiment of the method for collecting data according to the present invention;
FIG. 6 is a flow chart of the embodiment of the method for collecting data according to the present invention;
FIG. 7 is a flow chart of the embodiment of the method for collecting data according to the present invention; and
FIG. 8 is a flow chart of the embodiment of the method for collecting data according to the present invention.

### DETAILED DESCRIPTION OF THE EMBODIMENTS

In order to make the technical solution, objectives and merits of the present invention clearer, the present invention is hereinafter described in detail with reference to accompanying drawings and some exemplary embodiments.

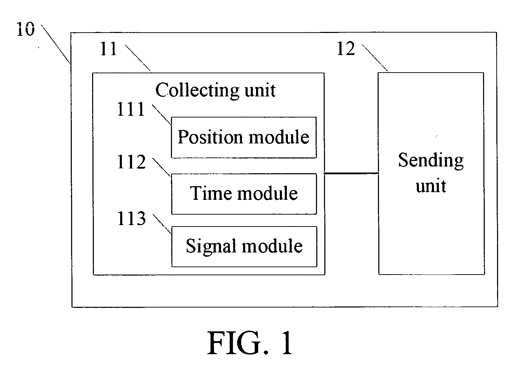

FIG. 1 is a schematic structural diagram of an embodiment of a mobile terminal for collecting data according to the present invention. In order to adapt to the development of multimedia services, the Digital Television Terrestrial Broadcasting (DTTB) network and the mobile network are combined to form a new type of service network. The DTTB has great capability of information transmission, can transmit data at more than 20Mbps in an 8MHz channel, and has rich frequency resources and good quality, adapts to mobile receiving and meets the asymmetry required for multimedia. The mobile network may be one or more of the Universal Mobile Telecommunications System (UMTS), Code Division Multiple Access (CDMA), and the like.

As shown in FIG. 1, the mobile terminal 10 includes a collecting unit 11 and a sending unit 12.

The collecting unit 11 is configured to collect data information required for broadcasting network optimization. The collecting unit 11 specifically includes a position module 111, a time module 112 and signal module 113.

The position module 111 is configured to collect position data information required for network optimization. The position information can be measured and acquired by a Global Positioning System (GPS), or by cell identification (Cell-ID) or other positioning manners. The position information provided by Cell-ID is not very accurate, so when accurate position information can be obtained, the position information obtained through Cell-ID is used as a reference.

The time module 112 is configured to collect time data information required for network optimization. The time data information may include such information as the duration, time interval, start time and end time of data collection.

The signal module 113 is configured to collect signal data information required for broadcasting network optimization. The data information required for broadcasting network optimization may include such information as signal strength types, signal strength measurement value, signal rate, position information of signal measurement, positioning manner of a position, time information of signal measurement, longitude, latitude and altitude.

The sending unit 12 is configured to send the data information collected by the collecting unit 11 to a server through an interactive channel of the mobile network.

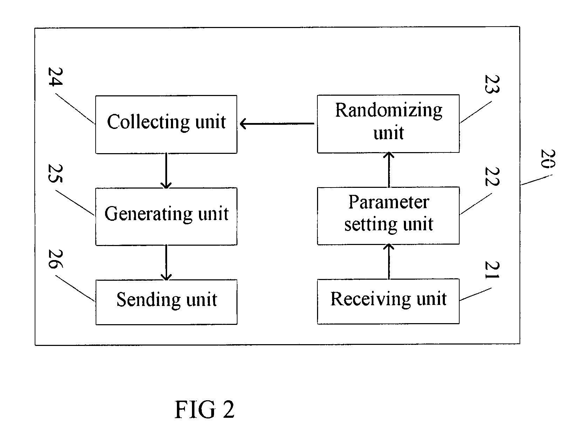

FIG. 2 is a schematic structural diagram of another embodiment of the mobile terminal for collecting data according to the present invention. As shown in FIG. 2, the mobile terminal 20 includes a receiving unit 21, a parameter setting unit 22, a randomizing unit 23, a collecting unit 24, a generating unit 25 and a sending unit 26. The units are connected sequentially.

The receiving unit 21 is configured to receive indicating information sent by a server. When the server sends the indicating information in a device management (DM) mode, a service guide (SG) data mode of a mobile broadcast service (BCAST), or a message-type information mode, the first receiving unit 21 receives the reported indicating information.

The parameter setting unit 22 is configured to set the indicating information in the mobile terminal without using the indicating information sent by the server. The indicating information includes instructions such as the data information of the broadcasting network, a trigger condition of collecting or reporting the data information, a report probability parameter P, message reporting policies, a universal resource identifier (URI), and a broadcast service ID or an application ID or a user ID or a reporting mode. The data information required for broadcasting network optimization includes information such as signal strength types, signal strength measurement value, signal rate, position information of signal measurement, positioning manner of a position, time information of signal measurement, longitude, latitude and altitude. The content included in the indicating information may be specifically set according to a sending mode adopted by the server and the data information required for broadcasting network optimization, and may vary with the demands of broadcasting network optimization.

The randomizing unit 23 is configured to generate a numerical value evenly distributed in an interval of [0, 1] randomly and compare the numerical value with a probability parameter P in the indicating information when the indicating information received by the receiving unit 21 sent by the server includes the probability parameter P or the indicating information set by the parameter setting unit 22 sets the probability parameter P. The rule for the comparison may be set in the indicating information, for example, the collection of the data information of the broadcasting network by the mobile terminal 10 is triggered when the random numerical value is smaller than the probability parameter P, and of course, the collection of the data information may also be triggered when the numerical value is greater than the probability parameter P or is within a certain probability range. In this embodiment, the collection of the data information of the broadcasting network by the mobile terminal 20 is triggered when the random numerical value is smaller than the probability parameter P. The probability parameter P is determined according to the amount distribution of mobile terminals in the network and the number of the mobile terminals that need to report the data, and may also be set through other modes. Such setting avoids unnecessary waste caused by excessive data reporting when enough data information can be obtained. The unit may also be connected at any position after the collecting unit 24 and before the sending unit 26, and is configured to trigger the mobile terminal to generate a report message or report the generated report message.

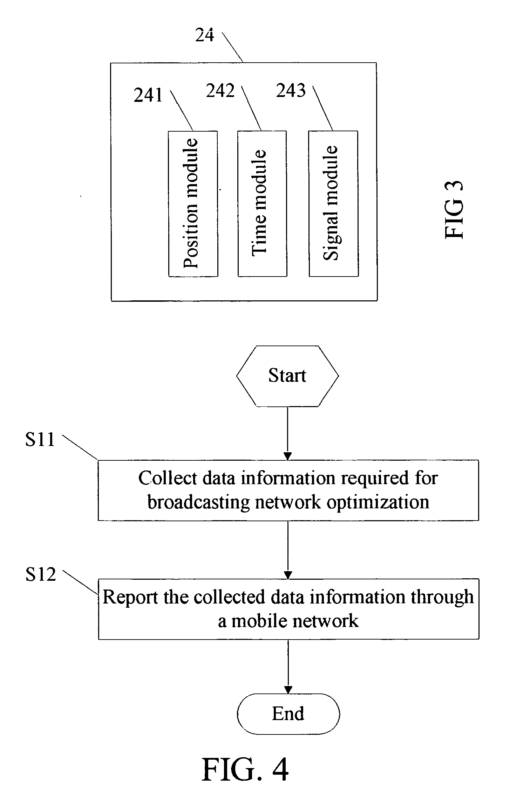

The collecting unit 24 is configured to collect the data information required for broadcasting network optimization. FIG. 3 is a schematic structural diagram of the collecting unit 24 of FIG. 2. As shown in FIG. 3, the collecting unit 24 specifically includes a position module 241, a time module 242 and a signal module 243.

The position module 241 is configured to measure and collect the position data information required for broadcasting network optimization; when the trigger condition set in the indicating information is position parameter information, the module is configured to measure the position parameter information and variation of a position parameter and trigger the collecting or reporting the data; when the indicating information sets that the data information to be collected includes position data information, the module is configured to collect the position data information. The position information can be measured and acquired by a GPS, or by Cell-ID or other positioning manners. Because the position information provided by Cell-ID is not very precise, when accurate position information can be obtained, the position information obtained through Cell-ID is used as a reference.

The time module 242 is configured to measure and collect the time data information required for broadcasting network optimization; when the trigger condition set in the indicating information is time parameter information, the module is configured to measure the time parameter information and variation of the time parameter and trigger the collecting or reporting the data; when the indicating information sets that the data information to be collected includes time data information, the module is configured to collect the time data information.

The signal module 243 is configured to measure and collect the signal data information required for broadcasting network optimization; when the trigger condition set in the indicating information is signal parameter information, the module is configured to measure the signal parameter information and variation of the signal parameter and trigger the collecting or reporting the data; when the indicating information sets that the data information to be collected includes signal data information, the module is configured to collect the signal data information. The module is further configured to detect whether the mobile network can be used normally, store the collected data information when the mobile network cannot be used normally, and report the collected data information through the mobile network when the mobile network recovers to normal.

The generating unit 25 is configured to encapsulate the data information collected by the mobile terminal and generate a report message. The collected data information needs to be encapsulated accordingly in order to better carry the relevant data information in the report message. In this embodiment, the collected data information is encapsulated in an Extensible Markup Language (XML) format, and the generated report message is reported to the server through the interactive channel of the mobile network. After XML data information encapsulation is performed according to XML logical relations, the report message can be reported to the server through at least one interactive channel of a Hypertext Transfer Protocol (HTTP) interactive channel, a Secure Hypertext Transfer Protocol (HTTPS) interactive channel, a short messaging service (SMS) interactive channel, a multimedia messaging service (MMS) interactive channel, or a General Packet Radio Service (GPRS) interactive channel. After receiving the report message, the server can perform effective optimization on the broadcasting network according to the data information collected by the mobile terminal.

The sending unit 26 is configured to send the report message generated by the generating unit 25 to the server through an interactive channel of the mobile network. When the indicating information sent by the server or set by the parameter setting unit 23 includes a policy determining that the mobile terminal combines multiple report messages into a message group and then reports the message group, the unit is further configured to combine multiple report messages into a message group to be sent.

FIG. 4 is a flow chart of an embodiment of a method for collecting data according to the present invention, which shows briefly the process for collecting the data information required for broadcasting network optimization by a mobile terminal of a mobile network. The data collecting method is suitable for a new type of service network that combines the digital terrestrial broadcasting network and the mobile network to adapt to the development of multimedia services.

Referring to FIG. 4, the specific steps for implementing network optimization according to the embodiment of the present invention are described as follows:
Step S11: The data information required for broadcasting network optimization is collected. This step implements the collection of the data information of the broadcasting network through the mobile terminal.
Step S12: The collected data information is reported through the mobile network. Thus, the problem that the broadcasting network as a single-direction broadcasting network does not include a back-transmission channel and is unable to spontaneously collect the data information of the broadcasting network by the terminal device is solved.

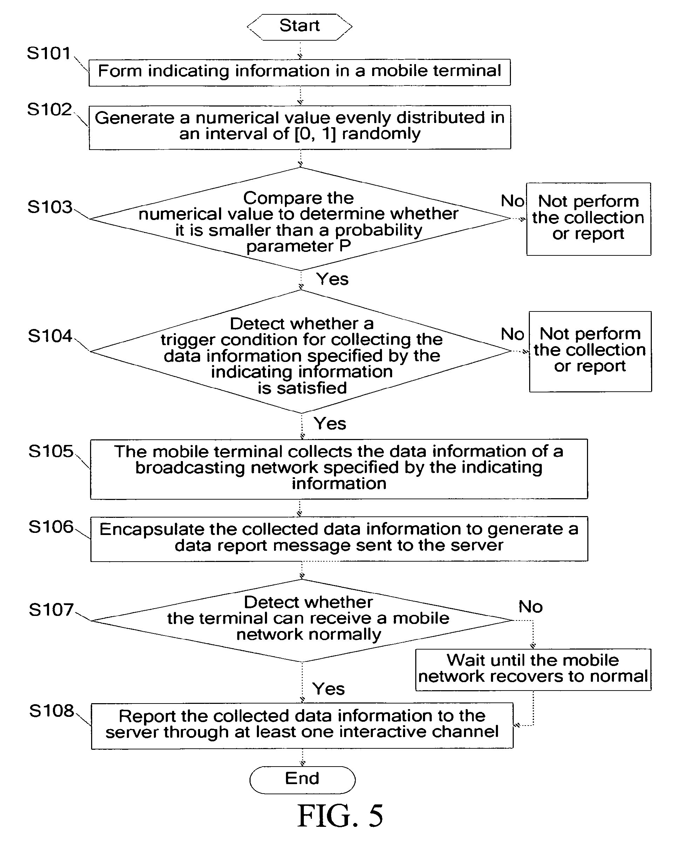

FIG. 5 is a flow chart of another embodiment of the method for collecting data according to the present invention.

Step S101: Indicating information of broadcasting network optimization is formed in the mobile terminal. The indicating information may be formed in at least the following two modes:
The indicating information is set in advance in the mobile terminal. Instructions such as the data information to be collected by the mobile terminal, the parameter trigger condition of data information collecting or report message reporting by the mobile terminal, report probability parameter P of the mobile terminal, message reporting policies, URI, broadcast service ID or application ID or user ID or reporting modes are set according to the data information required for broadcasting network optimization and the corresponding functional modules in the mobile terminal.

The server sends the indicating information to the mobile terminal. The indicating information sets instructions such as the data information required for broadcasting network optimization, the trigger condition of collecting or reporting the data information, report probability parameter P, message reporting policies, URI, broadcast service ID or application ID or user ID or reporting modes. The data information required for broadcasting network optimization includes information such as signal strength types, signal strength measurement value, signal rate, position information of signal measurement, positioning manner of a position, time information of signal measurement, longitude, latitude and altitude. The content included in the indicating information may be specifically set according to the sending mode adopted by the server and the data information required for broadcasting network optimization, and may vary with the demands of broadcasting network optimization.

The server may adopt the following modes to send the indicating information: the DM mode, the SG data mode of BCAST, or the message-type information mode.

When the DM mode is adopted, this embodiment adopts a management object (MO) mode to enable the mobile terminal to collect the data information required for broadcasting network optimization. An MO is defined as follows: <X>/SignalMeasurementEnabled.

The leaf node <X>/SignalMeasurementEnabled specifies whether the data information collecting function in the mobile terminal is in an activated or an inactivated state, and includes the following branch nodes:
Occurrence: ZeroOrOne
Format: boolean
Access Types: Get
Values: "true" -

In the above Values, if the value is "false" -, it indicates that the data information collecting function is in an inactivated state. If the value is "true", it indicates that the data information collecting function is in an activated state. The default value is "false".
Status: Required

The server generates the indicating information, including instructions such as the data information required for broadcasting network optimization, the trigger condition of collecting or reporting the data information, report probability parameter P, message reporting policies, URI, broadcast service ID or application ID or user ID or reporting modes. The server checks through a DM server before generating the indicating information. If the data information collecting function is in an inactivated state, the generated report indicating information includes activating information to activate the MO on the mobile terminal to change the function into the activated state.

The SG data mode of BCAST refers to sending the indicating information by expanding the Access fragmented information of the SG data, so as to achieve a more integrated description of the information without being over redundant. Table 1 is a simplified version of Access fragments, where some irrelevant contents are deleted. The preserved information in terms of relatively core requirements of the terminal is the expanded data for a data information collection requirement MR in the XML document of Access, to support the function for the mobile terminal to report the collected data information, as shown in Table 1:

**Table 1**

| **Name** | **Type** | **Category** | **Cardinality** | **Description** | **Data Type** |
|---|---|---|---|---|---|
| Access | E | | | Access fragment | |
| id | A | NM/TM | 1 | ID of Access fragment | anyURI |
| version | A | NM/TM | 1 | Version number of Access fragment | unsignedInt |
| validFrom | A | NM/TM | 0..1 | Valid time and start point of Access fragment | unsignedInt |
| validTo | A | NM/TM | 0..1 | Valid time and end point of Access fragment | unsignedInt |
| AccessType | E1 | NM/TM | 1 | Access type defined by Access fragment Subsequent specific information is omitted | |
| ...... | ...... | ...... | ...... | ...... | ...... |
| TerninalCapabil ityRrequirement | E1 | NO/TM | 0..1 | Requirement of Access fragment for the terminal | |
| Video | E2 | NO/TM | 0..1 | Video requirement | |
| Complexity | E3 | NO/TM | 1 | Set data | |
| Bitrate | E4 | NO/TM | 0..1 | Bit rate | |
| average | A | NO/TM | 0..1 | Average bit rate | unsignedShort |
| maximum | A | NO/TM | 0..1 | Maximum bit rate | unsignedShort |
| Resolution | E4 | NO/TM | 0..1 | Resolution | |
| horizontal | A | NO/TM | 1 | Horizontal resolution | unsignedShort |
| vertical | A | NO/TM | 1 | Vertical resolution | unsignedShort |
| temporal | A | NO/TM | 1 | Refreshing rate | decimal |
| MinimumBuffer Size | E4 | NO/TM | 0..1 | Minimum bufter size | unsignedInt |
| Audio | E2 | NO/TM | 0..1 | Audio | |
| Complexity | E3 | NO/TM | 1 | Set data | |
| Bitrate | E4 | NO/TM | 0..1 | Bit rate | |
| average | A | NO/TM | 0..1 | Average bit rate | unsignedShort |
| maximum | A | NO/TM | 0..1 | Maximum bit rate | unsignedShort |
| MinimumBuffer Size | E4 | NO/TM | 0..1 | Minimum buffer size | unsignedInt |
| DownloadFile | E2 | NO/TM | 0..1 | Download file | |
| MIMEType | E3 | NO/TM | 1..N | MIME type | string |
| codec | A | NO/TM | 0..1 | Codec | string |
| BandwidthRequi rement | E1 | NO/TM | 0..1 | Bandwidth requirement | unsignedInt |
| ServiceClass | E1 | NM/TM | 1..N | Service class | String |
| MeasurementRe quirement | E1 | NM/TM | 0..1 | Measurement parameter report | |
| uri | A | NM/TM | 1 | URI address of data reporting | String |
| Type | A | NM/TM | 1 | Type of data reporting | String |
| Probability | A | NM/TM | 1 | Probability of data reporting | unsignedShort |
| ReportMode | A | NM/TM | 1 | Mode of data reporting | String |

In the above table, expansion is performed based on the original Access fragment, and the content of the expansion is as shown in Table 2:

**Table 2**

| Measurement Requirement | E1 | NM/TM | 0..1 | Trigger condition of reporting data information | |
|---|---|---|---|---|---|
| uri | A | NM/TM | 1 | URI address of data information reporting | String |
| Type | A | NM/TM | 1 | Type of data information reporting | String |
| Probability | A | NM/TM | 1 | Probability of data information reporting | unsignedShort |
| ReportMode | A | NW/TM | 1 | Mode of data information reporting | String |

The expansion of the Access fragments is to expand an element data of MeasurementRequirement in the XML document of the original Access. The data includes the trigger condition of reporting the data information, the URI address of the data information reporting, the type of the data information reporting, the probability of the data information reporting and the mode of the data information reporting.

The message-type information mode refers to sending the indicating information to the mobile terminal through message-type information. In this embodiment, a PUSH message mode is adopted to send the reported indicating information. The server carries the address of the server to report the indicating information in the URI address of the Push message, and writes the ID applied in reporting the collected data information in App ID. Instruction information such as the data information required for broadcasting network optimization, the trigger condition for the mobile terminal to report, mobile terminal probability parameter P, message reporting policies, and reporting modes is set in other fields.

The payload of the Push message is as follows:

```
 <si>
 <dicicationhref="http://www.sample.com/signalMeasurement"
 created="2007-11-11T11:11:11Z"si-expires="2007-11-12T11:11:11Z">REPORT
 SignalMeasure Result</indication>
 </si>
```

In addition to the PUSH message, other message-type information may be adopted according to the same method, for example, message types such as instant messaging (IM), MMS, SMS, Unstructured Supplementary Service Data (USSD), push message (PUSH), or client provision (CP).

When the indicating information is sent to the mobile terminal by the server, the mobile terminal receives the indicating information, and then acquires instructions such as the data information required for broadcasting network optimization, the trigger condition of collecting or reporting the data information, report probability parameter P, message reporting policies, URI, broadcast service ID or application ID or user ID or reporting mode included in the indicating information.

Step S102: A numerical value evenly distributed in the interval of [0, 1] is generated randomly when a probability parameter is set in the indicating information.

Step S103: The generated random numerical value is compared with the probability parameter P set in the indicating information, and the rule for the comparison is based on the setting of the server or a preset setting. For example, the collecting the data information of the broadcasting network by the mobile terminal is triggered when the random numerical value is smaller than the probability parameter P, and of course, the collecting the data information may also be triggered when the numerical value is greater than the probability parameter P or is within a certain probability range. In this embodiment, the collecting data information of the broadcasting network by the mobile terminal is triggered when the random numerical value is smaller than the probability parameter P. The probability parameter P is determined according to the amount distribution of the mobile terminals in the network and the number of the mobile terminals that need to report the data, and may also be set through other methods. Such setting avoids unnecessary waste caused by excessive data reporting when enough data information can be obtained. In this embodiment, the collection of the data information of the broadcasting network by the mobile terminal is triggered when the random numerical value is smaller than the probability parameter P.

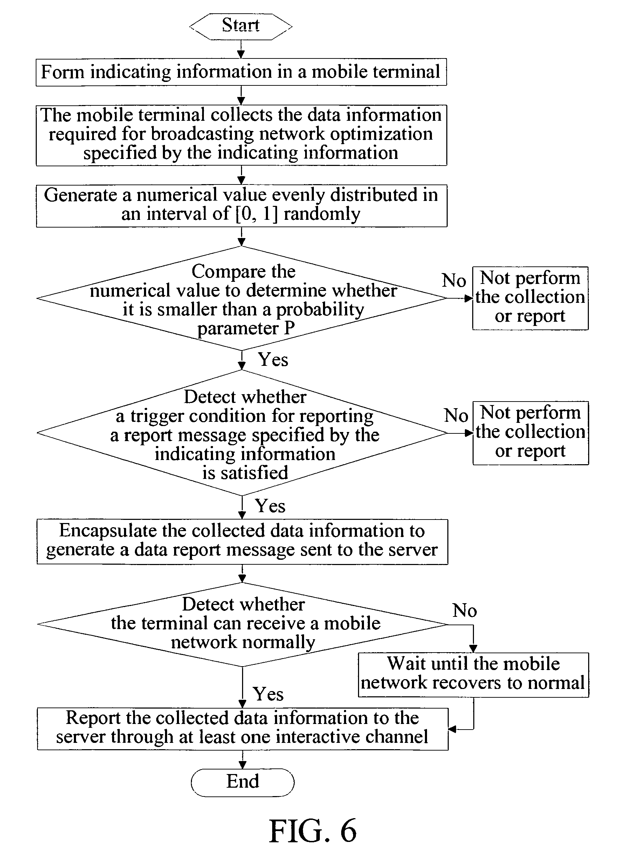

In this embodiment, step S102 and the next step S103 are performed before the data information collection, and the following steps are not performed if the numerical value is greater than the probability parameter P, and insignificant consumption of the terminal can be avoided. Of course, if the process of data information collection has little influence on the use of the mobile terminal, the mobile terminal spontaneously collects the data information without triggering the collection. FIG. 6 is a flow chart of still another embodiment of the method for collecting data according to the present invention. As shown in FIG. 6, the collection of the data information is performed first, and the generating the random numerical value and the comparing the numerical value with the probability parameter are performed before the mobile terminal sends the report message to the server to trigger the mobile terminal to generate the report message or report the generated report message. If reporting the data information by excessive mobile terminals has little influence on the server, the limitation of the probability may not be adopted, that is, the relevant probability parameter is not set in the indicating information.

Step S104: Whether the trigger condition for collecting the data information set by the indicating information is achieved is detected after determining that the mobile terminal needs to perform data information collection. The trigger condition includes at least one of a threshold parameter trigger condition, a fixed parameter trigger condition, or an interval parameter trigger condition.

The threshold parameter trigger condition is a preset network parameter value. If the trigger condition is the threshold parameter trigger condition, when the network parameter is lower than or higher than the threshold parameter set by the indicating information, the collecting or reporting the data information is triggered; for example, the indicating information sets that being lower than a certain signal strength triggers the collection of the data information, when the network signal that needs planning is lower than the set signal strength threshold, the mobile terminal collects the data information of the broadcasting network.

The fixed parameter trigger condition is a preset parameter range. If the trigger condition is the fixed parameter trigger condition, the collecting or reporting the data information is triggered when the network parameter reaches the fixed parameter range set by the indicating information. The collection of the data information for broadcasting network optimization may be in the range of a certain area, in a certain period of time or at a specific moment as desired, and the collection of the data information by the mobile terminal is triggered when reaching the area, the period of time, or the moment.

The interval parameter trigger condition is a preset interval parameter. If the trigger condition is the interval parameter trigger condition, the collecting or reporting the data information is triggered again according to the interval parameter set by the indicating information after the network parameter reaches first collecting or reporting set by the indicating information. The collection of the data information for broadcasting network optimization may be triggered at a particular time interval or distance interval as desired, for example, to report once every 2 hours. The trigger of the first reporting in the interval parameter is a fixed parameter, so the fixed parameter trigger can be considered as a special case of the interval parameter trigger, that is, an interval parameter trigger with only one trigger.

This step mainly serves to trigger the collection of the data information in this embodiment. However, referring to FIG. 6, when the mobile terminal spontaneously collects the data information without being triggered, likewise, the trigger condition including at least one of a threshold parameter trigger condition, a fixed parameter trigger condition or an interval parameter trigger condition can be used to trigger the mobile terminal to generate the report message or to report the generated report message.

Step S105: The mobile terminal collects the data information required for broadcasting network optimization. The data information required for broadcasting network optimization includes information such as signal strength types, signal strength measurement value, signal rate, position information of signal measurement, positioning manner of a position, time information of signal measurement, longitude, latitude and altitude.

Step S106: The collected data information is encapsulated to generate the report message. After finishing collecting the data information required for broadcasting network optimization, the mobile terminal needs to encapsulate the data information correspondingly in order to better carry the collected data information. In this embodiment, the collected data information is encapsulated in the XML format. Table 3 is a logic definition of one XML. Because the specific Document Type Definition (DTD) and Schema of the XML may be written in many ways, the Schema is not defined in detail here as long as the Schema meets the logical relations described below.

The XML logical relations of the data information relevant to broadcasting network optimization are as shown in Table 3.

**Table 3**

| **Name** | **Type** | **Category** | **Cardinality** | **Description** | **Data Type** |
|---|---|---|---|---|---|
| | | | | This XML aims to deliver the signal information of the network from the terminal to the network side. | |
| Audience Measurement | E | | | It may include the following XML elements: | |
| | | | | Measurement | |
| | | | | Position | |
| | | | | Time | |
| UserID | E1 | O | 0..N | The user ID is stored in BSM, which includes the following XML element: type | |
| Value | A | M | 1 | Value of UserID | String |
| type | A | M | 1 | The type of User ID is set, and the allowable values include: | unsignedByte |
| | | | | 0 - username defined in [RFC 2865] | |
| | | | | 1 - IMSI | |
| | | | | 2 - URI | |
| | | | | 3 - IMPI | |
| | | | | 4 - MSISDN | |
| | | | | 5-MIN | |
| | | | | 6-127 reserved for future use | |
| | | | | 128-255 reserved for proprietary use | |
| Measurement | E1 | M | 1..N | Representing the most fundamental measurement data | |
| Signal | A | M | 1 | Signal strength type | String |
| Value | E2 | M | 1 | Signal strength measurement value | complexType |
| Position | E1 | O | 0..1 | Representing the position information of signal measurement | complexType |
| type | A | M | 1 | Positioning manner | unsignedByte |
| | | | | 0- | |
| | | | | 1- | |
| | | | | 2- | |
| | | | | 3- | |
| longitude | A | M | 1 | Longitude | String |
| latitude | A | M | 1 | Latitude | String |
| altitude | A | M | 1 | Altitude | String |
| Time | E1 | O | 0..1 | Measurement time | String |

The XML data is encapsulated to form a report message in a manner of achieving the above XML logical relations. When the indicating information sets a policy of combining multiple report messages into a message group and then reporting the message group, the multiple report messages need to be combined into a message group for reporting.

Step S107: The generated report message is reported to the server through at least one interactive channel mode. The interactive channel mode includes at least one of HTTP, HTTPS, MMS or SMS, that is, one of the above or a combination of the above can be used to report as required. The HTTPS is based on the standards of Secure Sockets Layer (SSL) 3.0 and Transport Layer Security Protocol (TLS) 1.0.

Step S108: The collected data information is stored when the mobile network cannot be used normally, and the collected data information is reported through the mobile network when the mobile network recovers to normal. In this way, the loss of some necessary data information generated because the mobile network cannot be used normally is avoided.

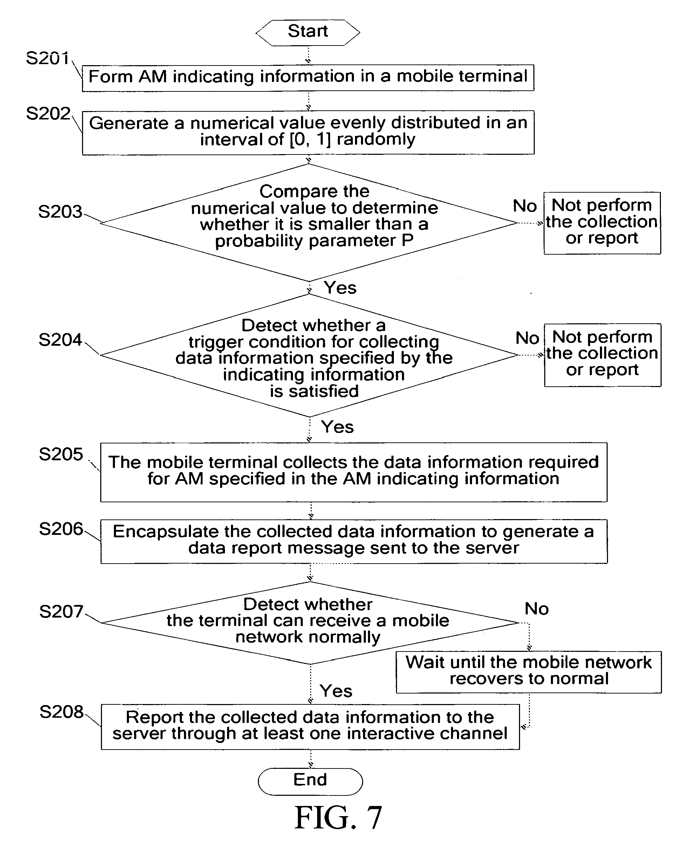

In addition to being configured to acquire the data information required for network optimization, the method for collecting data is further configured to acquire AM data information. FIG. 7 is a flow chart of another embodiment of the method for collecting data according to the present invention. The method for acquiring AM data includes the following steps.

Step S201: AM indicating information is formed in a mobile terminal. The indicating information may be formed in the following two modes:
The indicating information is set in advance in the mobile terminal. Instructions such as the data information to be collected by the mobile terminal, the parameter trigger condition of data information collection or report message reporting by the mobile terminal, report probability parameter P of the mobile terminal, message reporting policies, URI, broadcast service ID or application ID or user ID or reporting mode are set according to the data information required for AM and the corresponding functional modules in the mobile terminal.

The server sends the AM indicating information to the mobile terminal. The indicating information sets instructions such as the data information required for AM, the trigger condition of collecting or reporting the data information, report probability parameter P, message reporting policies, URI, broadcast service ID or application ID or user ID or reporting modes. The data information required for AM includes information such as signal strength types, signal strength measurement value, signal rate, position information of signal measurement, positioning manner of a position, time information of signal measurement, longitude, latitude and altitude, user ID, and user type. The content included in the AM indicating information may be specifically set according to the sending mode adopted by the server and the data information required for AM, and may vary according to the demands of the AM.

The server may adopt the following modes to send the indicating information: the DM mode, the SG data mode of BCAST, or the message-type information mode.

When the mode of DM is adopted, in this embodiment, the MO mode is adopted to enable the mobile terminal to collect the data information required for the AM. An MO is defined as follows: <X>/AudienceMeasurementEnabled.

The leaf node <X>/AudienceMeasurementEnabled specifies whether the data information collecting function in the mobile terminal is in an activated or an inactivated state, and includes the following branch nodes:
Occurrence: ZeroOrOne
Format: boolean
Access Types: Get
Values: true or false

In the above Values, if the value is "false", it indicates that the data information collecting function is in an inactivated state. If the value is "true", it indicates that the data information collecting function is in an activated state. The default value is "false".
Status: Required

The server generates the indicating information including instructions such as the data information required for AM, the trigger condition of collecting or reporting the data information, report probability parameter P, message reporting policies, URI, broadcast service ID or application ID or user ID or reporting modes. The server checks through a DM server before generating the indicating information. If the data information collecting function is in an inactivated state, the generated report indicating information includes activating information to activate the MO on the mobile terminal to change it into the activated state.

The SG data mode of BCAST refers to sending the AM indicating information by expanding the SG data fragments, so as to achieve a more integrated description of the information without being over redundant. The SG data fragments include service fragments, content fragments, access fragments and so on. The following is an example of expanding the access fragments. Table 1 is a simplified version of Access fragments. In Table 1, expansion is performed based on the original Access fragments, and the contents of the expansion are as shown in Table 2.

The expansion of the Access fragments is to add an element data MeasurementRequirement in the XML document of the original Access. The data includes the trigger condition of reporting the data information, the URI address of the data information reporting, the type of the data information reporting, the probability of the data information reporting, and the mode of the data information reporting.

The message-type information mode refers to sending the AM indicating information to the mobile terminal through message-type information. In this embodiment, a PUSH message mode is adopted to send the reported indicating information. The server carries the address of the server to report the indicating information in the URI address of the Push message, and writes the ID applied in reporting the collected data information in App ID. Instruction information such as the data information required for AM, the trigger condition for the mobile terminal to report, mobile terminal probability parameter P, message reporting policies and reporting modes are set in other fields.

The payload of the Push message is as follows:

```
 <si>
 <dicicationhref="http://www.sample.com/AudienceMeasurement"
 created="2007-11-11T11:11:11Z"si-expires="2007-11-12T11:11:11Z">REPORT
 AudienceMeasure Result</indication>
 </si>
```

In addition to the PUSH message, other message-type information may be adopted according to the same method, for example, message types such as IM, MMS, SMS, USSD, PUSH or CP.

When the indicating information is sent to the mobile terminal by the server, the mobile terminal receives the AM indicating information, and then acquires instructions such as the data information required for AM, the trigger condition of collecting or reporting the data information, report probability parameter P, message reporting policies, URI, broadcast service ID or application ID or user ID or reporting modes included in the indicating information.

Step S202: A numerical value evenly distributed in an interval of [0, 1] is generated randomly when a probability parameter is set in the AM indicating information.

Step S203: The generated random numerical value is compared with the probability parameter P set in the indicating information. The rule for the comparison is based on the setting of the server or a preset setting. The specific setting of the probability parameter is as described in Step S103, and is not described again here.

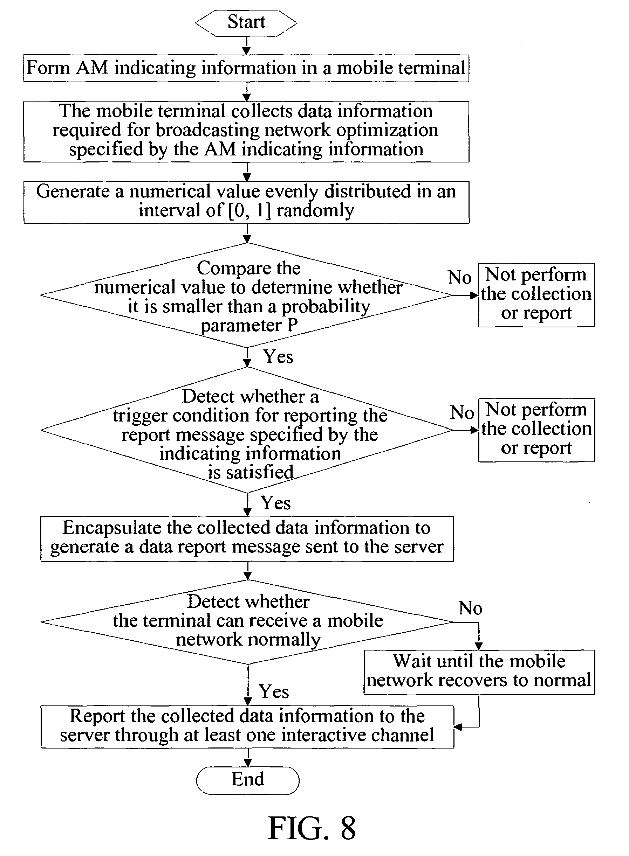

In this embodiment, Step S202 and the next step S203 are performed before the data information collection, and the following steps are not performed if the numerical value is greater than the probability parameter P, and thus the insignificant consumption of the terminal can be avoided. Of course, if the process of data information collection has little influence on the use of the mobile terminal, the mobile terminal spontaneous collects the data information without being triggered. FIG. 8 is a flow chart of still another embodiment of the method for collecting data according to the present invention. As shown in FIG. 8, the collection of the data information is performed first, and the generating the random numerical value and the comparing the numerical value with the probability parameter are performed before the mobile terminal sends the report message to the server to trigger the mobile terminal to generate the report message or report the generated report message; if the data information reported by excessive mobile terminals has little effect on the server, the limitation of the probability may not be adopted, that is, the relevant probability parameter is not set in the indicating information.

Step S204: Whether the trigger condition for collecting the data information set by the indicating information is achieved is detected after determining that the mobile terminal needs to perform data information collection. The trigger conditions are exemplified as follows.

The threshold parameter trigger condition is a preset network parameter value. When the trigger condition is the threshold parameter trigger condition, if the network parameter is lower than or higher than the threshold parameter set by the indicating information, the collecting or reporting the data information is triggered. For example, the indicating information sets that being lower than a certain signal strength triggers the collection of the data information, when the network signal that needs planning is lower than the set signal strength threshold, the mobile terminal collects the data information required for the AM.

The fixed parameter trigger condition is a preset parameter range. If the trigger condition is the fixed parameter trigger condition, the collecting or reporting the data information is triggered when the network parameter reaches the fixed parameter range set by the indicating information. The collection of the data information required for AM may be in the range of a certain area, in a certain period of time or at a specific moment as desired, and the collection of the data information by the mobile terminal is triggered when reaching the area, the period of time or the moment;

The interval parameter trigger condition is a preset interval parameter. If the trigger condition is the interval parameter trigger condition, the collecting or reporting the data information is triggered again according to the interval parameter set by the indicating information after the network parameter reaches first collecting or reporting set by the indicating information. The collection of the data information required for AM may be triggered at a particular time interval or distance interval as desired, for example, to report once every 2 hours. The trigger of the first reporting in the interval parameter is a fixed parameter, so the fixed parameter trigger can be considered as a special case of the interval parameter trigger, that is, an interval parameter trigger with only one trigger.

This step mainly serves to trigger the collection action of the data information in this embodiment. However, referring to FIG. 7, when the mobile terminal spontaneously collects data information without being triggered, likewise, the trigger condition including at least one of a threshold parameter trigger condition, a fixed parameter trigger condition or an interval parameter trigger condition can be used to trigger the mobile terminal to generate the report message or to report the generated report message.

Step S205: The mobile terminal collects the data information required for AM. The data information required for AM includes information such as signal strength types, signal strength measurement value, signal rate, position information of signal measurement, positioning manner of a position, time information of signal measurement, longitude, latitude and altitude.

Step S206: The collected data information is encapsulated to generate the report message. After finishing collecting the data information required for AM, the mobile terminal needs to encapsulate the data information correspondingly in order to better carry the collected data information. In this embodiment, the collected data information is encapsulated in the XML format. Table 3 is a logic definition for one XML. Because the specific DTD and Schema of the XML may be written in many ways, the Schema is not defined in detail here as long as its Schema meets the logical relations described below.

The XML logical relations of the data information relevant to AM are as shown in Table 3. The XML data is encapsulated to form a report message in a manner of achieving the above XML logical relations. When the indicating information sets a policy of combining multiple report messages into a message group and then reporting the message group, the multiple report messages need to be combined into a message group for reporting.

Step S207: The generated report message is reported to the server through at least one interactive channel mode. The interactive channel mode includes at least one of HTTP, HTTPS, MMS or SMS, that is, one of the above or a combination of the above can be adopted to report as desired.

Step S208: The collected data information is stored when the mobile network cannot be used normally, and the collected data information is reported through the mobile network when the mobile network recovers to normal. In this way, the loss of some necessary data information generated because the mobile network cannot be used normally is avoided.

In addition to being configured to acquire the data information required for network optimization and the AM data information, the above method for collecting data is further configured to collect other data information of a broadcasting network.

In embodiments of the present invention, by utilizing the mobile terminal in a mobile network to collect the data information of the broadcasting network, the problem that the broadcasting network as a single-direction broadcasting network does not include a back-transmission channel and is unable to spontaneously collect the data information of the broadcasting network by the terminal device is solved. At the same time, the data information of the broadcasting network usually in an avoided or neglected area by a drive test collecting method can be collected by utilizing the mobile terminal in the mobile network, and considerable labor, materials and time can be saved by collecting data information spontaneously through the mobile terminal.

The above descriptions are merely some exemplary embodiments of the present invention, but not intended to limit the present invention.

## Claims

1. A method for collecting data, comprising:
collecting (S11) data information of a broadcasting network; and
reporting (S12) the collected data information through a mobile network;
wherein the collecting or reporting the data information is triggered according to a trigger condition set in indicating information;
wherein before the collecting or reporting the data information is triggered according to the trigger conditions set in the indicating information, the method being further **characterised by**:
generating an action policy for indicating whether to collect or report the data information; wherein the generating the action policy comprises:
generating (S 102) a numerical value evenly distributed in an interval of [0, 1] randomly;
comparing (S 103) the numerical value with the set probability parameter P, determining whether to collect or report the data information according to a comparison result, wherein a corresponding relation between the comparison result and the collecting or reporting the data information comprises:
collecting or reporting the data information when the random numerical value is smaller than the probability parameter P; or
collecting or reporting the data information when the random numerical value is greater than the probability parameter P.

2. The method for collecting data according to claim 1, wherein the indicating information comprises at least one of the following:
the data information of the broadcasting network,
the trigger condition of the collecting or reporting the data information,
a report probability parameter P,
message reporting policies,
a universal resource identifier, URI,
a broadcast service ID,
an application ID;
a user ID; and
a reporting mode.

3. The method for collecting data according to claim 1, wherein the trigger condition comprises at least one of a threshold parameter trigger condition, a fixed parameter trigger condition, or an interval parameter trigger condition,
the threshold parameter trigger condition is a preset network parameter value, and the collecting or reporting the data information is triggered when the network parameter is lower than or higher than a threshold parameter set by the indicating information;
the fixed parameter trigger condition is a preset parameter range, and the collecting or reporting the data information is triggered when the network parameter reaches a fixed parameter range set by the indicating information; and
the interval parameter trigger condition is a preset interval parameter, and the collecting or reporting the data information is triggered again according to the interval parameter set by the indicating information after the network parameter reaches first collecting or reporting set by the indicating information.

4. The method for collecting data according to claim 1, wherein the reporting the collected data information through the mobile network comprises:
sending the collected data information to a server through at least one interactive channel in the mobile network;
wherein the interactive channel comprises a Hypertext Transfer Protocol, HTTP, interactive channel, a Secure Hypertext Transfer Protocol, HTTPS, interactive channel, a short messaging service, SMS, interactive channel, a multimedia messaging service, MMS, interactive channel or a General Packet Radio Service, GPRS, interactive channel.

5. The method for collecting data according to claim 1, wherein before the collecting or reporting the data information is triggered according to the trigger conditions set in the indicating information, the method further comprises:
setting the indicating information in advance in the mobile terminal; or
receiving the indicating information sent by a server.

6. The method for collecting data according to claim 5, wherein, the indicating information sent by the server comprises the indicating information sent in a device management, DM, mode, the indicating information sent in a service guide, SG, mode of a mobile broadcast service, BCAST, or the indicating information sent in a message-type information mode;
wherein the message-type information comprises: instant messaging, IM, MMS, SMS, Unstructured Supplementary Service Data, USSD, push message, PUSH, or client provision, CP, message.

7. The method for collecting data according to claim 4, wherein before the sending the collected data information to the server through at least one interactive channel in the mobile network, the method comprises:
encapsulating (S 106) the collected data information to generate a report message;
the sending the collected data information to the server through at least one interactive channel in the mobile network comprises reporting the report message to the server through at least one interactive channel in the mobile network.

8. The method for collecting data according to any one of claims 1 to 7, further comprising:
storing the collected data information when the mobile network is not capable of being used normally, and reporting the collected data information through the mobile network when the mobile network recovers to normal.

9. A mobile terminal, comprising:
a collecting unit (11), configured to collect data information of a broadcasting network;
a sending unit (12), configured to send the collected data information to a server; and further **characterised by**:
a randomizing unit (23), configured to generate a numerical value evenly distributed in an interval of [0, 1] randomly and compare the numerical value with a set probability parameter P, and determine whether to trigger the collecting unit to collect the data information or trigger the sending unit to report the data information according to a comparison result, wherein a corresponding relation between the comparison result and the collecting or reporting the data information comprises:
collecting or reporting the data information when the random numerical value is smaller than the probability parameter P; or
collecting or reporting the data information when the random numerical value is greater than the probability parameter P.

10. The mobile terminal according to claim 9, further comprising:
a receiving unit (21), configured to receive indicating information sent by the sever;
a parameter setting unit (22), configured to set the indicating information in the mobile terminal; and
a generating unit (25), configured to encapsulate the collected data information and generate a report message sent to the server.

11. The mobile terminal according to claim 9, wherein the collecting unit further comprises:
a position module (241), configured to measure and collect position data information, wherein when indicating information sets position parameter information as a threshold parameter, a fixed parameter or an interval parameter of a trigger condition, the module is configured to measure the position parameter information and variation of a position parameter and trigger the collecting or reporting operation of the data; when the indicating information sets that the data information to be collected comprises the position data information, the module is configured to collect the position data information;
a time module (242), configured to measure and collect time data information, wherein when the indicating information sets time parameter information as the threshold parameter, the fixed parameter or the interval parameter of the trigger condition, the module is configured to measure the time parameter information and variation of a time parameter and trigger the collecting or reporting operation of the data; when the indicating information sets that the data information to be collected comprises the time data information, the module is configured to collect the time data information; and
a signal module (243), configured to measure and collect signal data information, wherein when the indicating information sets signal parameter information as the threshold parameter, the fixed parameter or the interval parameter of the trigger condition, the module is configured to measure the signal parameter information and variation of a signal parameter and trigger the collecting or reporting operation of the data; when the indicating information sets that the data information to be collected comprises the signal data information, the module is configured to collect the signal data information; the module is further configured to detect whether a mobile network is capable of being normally.

## Patentansprüche

1. Verfahren zum Sammeln von Daten, umfassend:
Sammeln (S11) von Dateninformationen eines Ausstrahlungsnetzes; und
Melden (S12) der gesammelten Dateninformationen durch ein Mobilnetz;
wobei das Sammeln oder Melden der Dateninformationen gemäß einer in Angabeinformationen gesetzten Triggerbedingung getriggert wird;
wobei das Verfahren, bevor das Sammeln oder Melden der Dateninformationen gemäß in den Angabeinformationen gesetzten Triggerbedingungen getriggert wird, ferner **gekennzeichnet ist durch**
Erzeugen einer Aktionsrichtlinie zum Angeben, ob die Dateninformationen zu sammeln oder zu melden sind; wobei das Erzeugen der Aktionsrichtlinie Folgendes umfasst:
Erzeugen (S 102) eines numerischen Werts, der zufällig in einem Intervall von [0, 1] gleichverteilt ist;
Vergleichen (S103) des numerischen Werts mit dem gesetzten Wahrscheinlichkeitsparameter P, Bestimmen, ob die Dateninformationen zu sammeln oder zu melden sind, gemäß einem Vergleichsergebnis, wobei eine Korrespondenzbeziehung zwischen dem Vergleichsergebnis und dem Sammeln oder
Melden der Dateninformationen Folgendes umfasst:
Sammeln oder Melden der Dateninformationen, wenn der zufällige numerische Wert kleiner als der Wahrscheinlichkeitsparameter P ist; oder
Sammeln oder Melden der Dateninformationen, wenn der zufällige numerische Wert größer als der Wahrscheinlichkeitsparameter P ist.

2. Verfahren zum Sammeln von Daten nach Anspruch 1, wobei die Angabeinformationen mindestens eine der Folgenden umfassen:
die Dateninformationen des Ausstrahlungsnetzes,
die Triggerbedingung des Sammelns oder Meldens der Dateninformationen,
einen Meldungswahrscheinlichkeitsparameter P,
Nachrichtenmelderichtlinien,
einen Universal Resource Identifier, URI,
eine Ausstrahlungsdienst-ID,
eine Anwendungs-ID;
eine Benutzer-ID; und
einen Meldemodus.

3. Verfahren zum Sammeln von Daten nach Anspruch 1, wobei die Triggerbedingung mindestens eine einer Schwellenparameter-Triggerbedingung, einer Festparameter-Triggerbedingung oder einer Intervallparameter-Triggerbedingung umfasst,
die Schwellenparameter-Triggerbedingung ein voreingestellter Netzparameterwert ist und das Sammeln oder Melden der Dateninformationen getriggert wird, wenn der Netzparameter kleiner oder größer als ein durch die Angabeinformationen gesetzter Schwellenparameter ist;
die Festparameter-Triggerbedingung ein voreingestellter Parameterbereich ist und das Sammeln oder Melden der Dateninformationen getriggert wird, wenn der Netzparameter einen durch die Angabeinformationen gesetzten Festparameterbereich erreicht; und
die Intervallparameter-Triggerbedingung ein voreingestellter Intervallparameter ist und das Sammeln oder Melden der Dateninformationen wieder gemäß dem durch die Angabeinformationen gesetzten Intervallparameter getriggert wird, nachdem der Netzparameter das durch die Angabeinformationen gesetzte erste Sammeln oder
Melden erreicht.

4. Verfahren zum Sammeln von Daten nach Anspruch 1, wobei das Melden der gesammelten Dateninformationen durch das Mobilnetz Folgendes umfasst:
Senden der gesammelten Dateninformationen zu einem Server durch mindestens einen interaktiven Kanal in dem Mobilnetz;
wobei der interaktive Kanal einen interaktiven Kanal des Hypertext Transfer Protocol, HTTP, einen interaktiven Kanal des Secure Hypertext Transfer Protocol, HTTPS, einen interaktiven Kanal des Short Messaging Service, SMS, einen interaktiven Kanal des Multimedia Messaging Service, MMS, oder einen interaktiven Kanal des General Packet Radio Service, GPRS, umfasst.

5. Verfahren zum Sammeln von Daten nach Anspruch 1, wobei das Verfahren, bevor das Sammeln oder Melden der Dateninformationen gemäß den in den Angabeinformationen gesetzten Triggerbedingungen getriggert wird, ferner Folgendes umfasst:
Setzen der Angabeinformationen im Voraus in dem mobilen Endgerät; oder
Empfangen der durch einen Server gesendeten Angabeinformationen.

6. Verfahren zum Sammeln von Daten nach Anspruch 5, wobei die durch den Server gesendeten Angabeinformationen die in einem Modus des Device Management, DM, gesendeten Angabeinformationen, die in einem Modus des Service Guide, SG, eines Mobile Broadcast Service, BCAST, gesendeten Angabeinformationen oder die in einem Informationsmodus des Nachrichtentyps gesendeten Angabeinformationen umfassen;
wobei die Informationen des Nachrichtentyps Folgendes umfassen: Instant Messaging, IM, MMS, SMS, Unstructured Supplementary Service Data, USSD, Push-Nachricht, PUSH, oder eine Nachricht der Client Provision, CP.

7. Verfahren zum Sammeln von Daten nach Anspruch 4, wobei das Verfahren vor dem Senden der gesammelten Dateninformationen zu dem Server durch mindestens einen interaktiven Kanal in dem Mobilnetz Folgendes umfasst:
Einkapseln (S 106) der gesammelten Dateninformationen, um eine Meldungsnachricht zu erzeugen;
wobei das Senden der gesammelten Dateninformationen zu dem Server durch mindestens einen interaktiven Kanal in dem Mobilnetz das Melden der Meldungsnachricht an den Server durch mindestens einen interaktiven Kanal in dem Mobilnetz umfasst.

8. Verfahren zum Sammeln von Daten nach einem der Ansprüche 1 bis 7, ferner umfassend:
Speichern der gesammelten Dateninformationen, wenn das Mobilnetz nicht normal benutzt werden kann, und Melden der gesammelten Dateninformationen durch das Mobilnetz, wenn das Mobilnetz zum Normalzustand zurückkehrt.

9. Mobiles Endgerät, umfassend:
eine Sammeleinheit (11), die dafür ausgelegt ist, Dateninformationen eines Ausstrahlungsnetzes zu sammeln;
eine Sendeeinheit (12), die dafür ausgelegt ist, die gesammelten Dateninformationen zu einem Server zu senden; und
ferner **gekennzeichnet durch**
eine Randomisierungseinheit (23), die dafür ausgelegt ist, zufällig einen numerischen Wert zu erzeugen, der in einem Intervall von [0, 1] gleichverteilt ist, und Vergleichen des numerischen Werts mit einem gesetzten Wahrscheinlichkeitsparameter P und Bestimmen, ob die Sammeleinheit zu trigger ist, um die Dateninformationen zu sammeln, oder die Sendeeinheit zu triggern ist, um die Dateninformationen zu melden, gemäß einem Vergleichsergebnis, wobei eine Korrespondenzbeziehung zwischen dem Vergleichsergebnis und dem Sammeln oder Melden der Dateninformationen Folgendes umfasst:
Sammeln oder Melden der Dateninformationen, wenn der zufällige numerische Wert kleiner als der Wahrscheinlichkeitsparameter P ist; oder
Sammeln oder Melden der Dateninformationen, wenn der zufällige numerische Wert größer als der Wahrscheinlichkeitsparameter P ist.

10. Mobiles Endgerät nach Anspruch 9, ferner umfassend:
eine Empfangseinheit (21), die dafür ausgelegt ist, durch den Server gesendete Angabeinformationen zu empfangen;
eine Parametersetzeinheit (22), die dafür ausgelegt ist, die Angabeinformationen in dem mobilen Endgerät zu setzen; und
eine Erzeugungseinheit (25), die dafür ausgelegt ist, die gesammelten Dateninformationen einzukapseln und eine zu dem Server gesendete Meldungsnachricht zu erzeugen.

11. Mobiles Endgerät nach Anspruch 9, wobei die Sammeleinheit ferner Folgendes umfasst:
ein Positionsmodul (241), das dafür ausgelegt ist, Positionsdateninformationen zu messen und zu sammeln, wobei das Modul, wenn Angabeinformationen Positionsparameterinformationen als einen Schwellenparameter, einen festen Parameter oder einen Intervallparameter einer Triggerbedingung setzen, dafür ausgelegt ist, die Positionsparameterinformationen und Schwankung eines Positionsparameters zu messen und die Sammel- oder Meldeoperation der Daten zu triggern; und wenn die Angabeinformationen setzen, dass die zu sammelnden Dateninformationen die Positionsdateninformationen umfassen, das Modul dafür ausgelegt ist, die Positionsdateninformationen zu sammeln;
ein Zeitmodul (242), das dafür ausgelegt ist, Zeitdateninformationen zu messen und zu sammeln, wobei das Modul, wenn die Angabeinformationen Zeitparameterinformationen als den Schwellenparameter, den festen Parameter oder den Intervallparameter der Triggerbedingung setzen, dafür ausgelegt ist, die Zeitparameterinformationen und Schwankung eines Zeitparameters zu messen und die Sammel- oder Meldeoperation der Daten zu triggern; und wenn die Angabeinformationen setzen, dass die zu sammelnden Dateninformationen die Zeitdateninformationen umfassen, das Modul dafür ausgelegt ist, die Zeitdateninformationen zu sammeln; und
ein Signalmodul (243), das dafür ausgelegt ist, Signaldateninformationen zu messen und zu sammeln, wobei das Modul, wenn die Angabeinformationen Signalparameterinformationen als den Schwellenparameter, den festen Parameter oder den Intervallparameter der Triggerbedingung setzen, dafür ausgelegt ist, die Signalparameterinformationen und Schwankung eines Signalparameters zu messen und die Sammel- oder Meldeoperation der Daten zu triggern; und wenn die Angabeinformationen setzen, dass die zu sammelnden Dateninformationen die Signaldateninformationen umfassen, das Modul dafür ausgelegt ist, die Signaldateninformationen zu sammeln; und das Modul ferner dafür ausgelegt ist, zu detektieren, ob ein Mobilnetz normal sein kann.

## Revendications

1. Procédé permettant de collecter des données, comprenant les étapes suivantes :
collecter (S11) des informations de données d'un réseau de diffusion ; et
transmettre (S12) les informations de données collectées par l'intermédiaire d'un réseau mobile ;
la collecte ou la transmission des informations de données étant déclenchées selon un ensemble de conditions de déclenchement contenu dans des informations d'indication ;
le procédé étant en outre caractérisé, avant le déclenchement de la collecte ou de la transmission des informations de données selon l'ensemble de conditions de déclenchement contenu dans les informations d'indication, par les étapes suivantes :
générer une politique d'action pour indiquer s'il faut collecter ou transmettre les informations de données ; l'étape consistant à générer la politique d'action comprenant :
générer (S102) une valeur numérique également distribuée dans un intervalle de [0, 1] de façon aléatoire ;
comparer (S103) la valeur numérique avec le paramètre de probabilité P fixé, déterminer s'il faut collecter ou transmettre les informations de données selon un résultat de comparaison, une relation correspondante entre le résultat de comparaison et la collecte ou la transmission des informations de données comprenant les étapes suivantes :
collecter ou transmettre les informations de données lorsque la valeur numérique aléatoire est inférieure au paramètre de probabilité P ; ou
collecter ou transmettre les informations de données lorsque la valeur numérique aléatoire est supérieure au paramètre de probabilité P.

2. Procédé permettant de collecter des données selon la revendication 1, dans lequel les informations d'indication comprennent au moins un des éléments suivants :
les informations de données du réseau de diffusion,
la condition de déclenchement de la collecte ou de la transmission des informations de données,
un paramètre de probabilité de transmission P,
des politiques de transmission de messages,
un identifiant universel de ressource, URI,
un ID de service de diffusion,
un ID d'application,
un identifiant utilisateur ; et
un mode de transmission.

3. Procédé permettant de collecter des données selon la revendication 1, dans lequel la condition de déclenchement comprend au moins un élément parmi une condition de déclenchement de paramètre de seuil, une condition de déclenchement de paramètre fixe, ou une condition de déclenchement de paramètre d'intervalle,
la condition de déclenchement de paramètre de seuil est une valeur de paramètre réseau prédéfinie, et la collecte ou la transmission des informations de données sont déclenchées lorsque le paramètre réseau est inférieur ou supérieur à un paramètre de seuil défini par les informations d'indication ;
la condition de déclenchement de paramètre fixe est une plage de paramètres prédéfinie, et la collecte ou la transmission des informations de données sont déclenchées lorsque le paramètre réseau atteint une plage de paramètres fixes définie par les informations d'indication ; et
la condition de déclenchement de paramètre d'intervalle est un paramètre d'intervalle prédéfini, et la collecte ou la transmission des informations de données sont déclenchées à nouveau selon le paramètre d'intervalle défini par les informations d'indication après que le paramètre réseau a atteint en premier la collecte ou la transmission définies par les informations d'indication.

4. Procédé permettant de collecter des données selon la revendication 1, dans lequel l'étape consistant à transmettre les informations de données collectées par l'intermédiaire du réseau mobile comprend :
envoyer les informations de données collectées à un serveur par l'intermédiaire d'au moins un canal interactif dans le réseau mobile ;
le canal interactif comprenant un canal interactif, HTTP, protocole de transfert hypertexte, un canal interactif, HTTPS, protocole de transfert hypertexte sécurisé, un canal interactif de service de messagerie texto, SMS, un canal interactif de service de messagerie multimédia, MMS, ou un canal interactif, GPRS, service général de radiocommunication par paquets.

5. Procédé permettant de collecter des données selon la revendication 1, dans lequel avant le déclenchement de la collecte ou de la transmission des informations de données selon l'ensemble de conditions de déclenchement contenu dans les informations d'indication, le procédé comprend en outre les étapes suivantes :
définir les informations d'indication à l'avance dans le terminal mobile ; ou
recevoir les informations d'indication envoyées par un serveur.

6. Procédé permettant de collecter des données selon la revendication 5, dans lequel les informations d'indication envoyées par le serveur comprennent les informations d'indication envoyées dans un mode de gestion de dispositif, DM, les informations d'indication envoyées dans un mode de guide de service, SG, d'un service de diffusion mobile, BCAST, ou les informations d'indication envoyées dans un mode d'informations de type message ;
les informations de type message comprenant : la messagerie instantanée, IM, MMS, SMS, USSD (données de services supplémentaires non structurées), message poussé, PUSH, ou message de fourniture client, CP.

7. Procédé permettant de collecter des données selon la revendication 4, dans lequel avant l'étape consistant à envoyer les informations de données collectées au serveur par l'intermédiaire d'au moins un canal interactif dans le réseau mobile, le procédé comprend :
encapsuler (S106) les informations de données collectées pour générer un message de rapport ;
l'étape consistant à envoyer les informations de données collectées au serveur par l'intermédiaire d'au moins un canal interactif dans le réseau mobile comprenant : transmettre le message de rapport au serveur par l'intermédiaire d'au moins un canal interactif dans le réseau mobile.

8. Procédé permettant de collecter des données selon l'une quelconque des revendications 1 à 7, comprenant en outre les étapes suivantes :
stocker les informations de données collectées lorsque le réseau mobile ne peut pas être utilisé normalement, et transmettre les informations de données collectées par l'intermédiaire du réseau mobile lorsque le réseau mobile a récupéré.

9. Terminal mobile, comprenant :
une unité de collecte (11), configurée pour collecter des informations de données d'un réseau de diffusion ;
une unité émettrice (12), configurée pour envoyer les informations de données collectées à un serveur ; et **caractérisé en outre par** :
une unité de randomisation (23), configurée pour générer une valeur numérique également distribuée dans un intervalle de [0, 1] de façon aléatoire et comparer la valeur numérique à un paramètre de probabilité P défini, et déterminer s'il faut amener l'unité de collecte à collecter les informations de données ou amener l'unité émettrice à transmettre les informations de données selon un résultat de comparaison,
une relation correspondante entre le résultat de comparaison et la collecte ou la transmission des informations de données comprenant les étapes suivantes :
collecter ou transmettre les informations de données lorsque la valeur numérique aléatoire est inférieure au paramètre de probabilité P ; ou
collecter ou transmettre les informations de données lorsque la valeur numérique aléatoire est supérieure au paramètre de probabilité P.

10. Terminal mobile selon la revendication 9, comprenant en outre :
une unité de réception (21), configurée pour recevoir des informations d'indication envoyées par le serveur ;
une unité de détermination de paramètre (22), configurée pour déterminer les informations d'indication dans le terminal mobile ; et
une unité de génération (25), configurée pour encapsuler les informations de données collectées et générer un message de rapport envoyé au serveur.

11. Terminal mobile selon la revendication 9, dans lequel l'unité de collecte comprend en outre :
un module de position (241), configuré pour mesurer et collecter des informations de données de position, dans lequel lorsque des informations d'indication déterminent des informations de paramètre de position comme un paramètre de seuil, un paramètre fixe ou un paramètre d'intervalle d'une condition de déclenchement, le module est configuré pour mesurer les informations de paramètre de position et la variation d'un paramètre de position et déclencher l'opération de collecte ou de transmission des données ; lorsque les informations d'indication déterminent que les informations de données à collecter comprennent les informations de données de position, le module est configuré pour collecter les informations de données de position ;
un module de temps (242), configuré pour mesurer et collecter des informations de données de temps, dans lequel lorsque les informations d'indication déterminent des informations de paramètre de temps comme le paramètre de seuil, le paramètre fixe ou le paramètre d'intervalle de la condition de déclenchement, le module est configuré pour mesurer les informations de paramètre de temps et la variation d'un paramètre de temps et déclencher l'opération de collecte ou de transmission des données ; lorsque les informations d'indication déterminent que les informations de données à collecter comprennent les informations de données de temps, le module est configuré pour collecter les informations de données de temps ; et
un module de signal (243), configuré pour mesurer et collecter des informations de données de signal, dans lequel lorsque les informations d'indication déterminent des informations de paramètre de signal comme le paramètre de seuil, le paramètre fixe ou le paramètre d'intervalle de la condition de déclenchement, le module est configuré pour mesurer les informations de paramètre de signal et la variation d'un paramètre de signal et déclencher l'opération de collecte ou de transmission des données ; lorsque les informations d'indication déterminent que les informations de données à collecter comprennent les informations de données de signal, le module est configuré pour collecter les informations de données de signal ; le module est en outre configuré pour détecter si un réseau mobile fonctionne normalement.
